# EUROPEAN PATENT APPLICATION

(11) **EP 0 761 545 A2**
(43) Date of publication of application: **12.03.1997**
(21) Application number: 96113610.8
(22) Date of filing: 26.08.1996
(51) Int. Cl.: B65B 35/24

(54) **A device for subdividing rows of moving articles, for example, for automatic packaging systems**

(30) Priority: 08.09.1995 IT TO950723
(71) Applicant: CAVANNA S.p.A., I-28077 Prato Sesia Novara (IT)
(72) Inventor: Francioni, Renzo, 28077 Prato Sesia (Novara) (IT)
(74) Representative: Bosotti, Luciano

(57) **Abstract**

The row of articles (P) to be subdivided advances on a main conveyor (12) beside which there is a further conveyor (14) for receiving a derived row of articles (A). The articles which are to form the derived row are diverted selectively towards the branch conveyor (14) by a pneumatic diverting unit (16) comprising one or more blowing heads (18) which generate an air-flow such as to strike the articles (P) laterally. The air-flow may be produced intermittently so as to strike only the articles (P) which are to constitute the derived row, or continuously, thus striking all of the articles (P). In the latter case, the articles (P) which are not to be diverted are restrained on the main conveyor (12), for example, by the creation of a zone (46) of subatmospheric pressure which acts on the articles subject to restraint through perforated areas (34) in the respective conveyor so as to render these articles insensitive to the action of the diverting air-flow.

## Description

The present invention relates to devices for subdividing rows of moving articles particularly according to the preamble to Claim 1.

Devices of the type specified above are used, for example, in automatic packaging systems such as systems for the automatic packaging of confectionery articles. A typical function performed by the device is that of subdividing a row of articles coming from a processing station (for example, a wrapping machine in which individual articles or groups of articles are inserted in wrappers such as those currently known as "flow-packs") into two or possibly more derived rows each of which is intended to advance towards a respective further handling station situated downstream (for example, a machine for the formation of multiple packs of the type called "multi-packs", a boxing machine, etc.).

Devices which perform functions to subdivide rows by direct manipulation of the articles are known in the art. For example, in a solution already used by the Applicant in the past, a conveyor with blades is mounted above the conveyor (typically a belt conveyor) on which the row of articles to be subdivided is advancing, the entrainment axis of the conveyor with blades being slightly inclined to the direction of advance of the articles of the starting row. The blades of the upper conveyor act selectively from above on the articles of the starting row (for example, on one article in every two) so as to urge them onto a further branch conveyor arranged parallel to the input conveyor. Two rows of articles are therefore available, advancing side by side, at the output of the device. The same operation can be repeated several times in order to derive virtually any number of output rows of articles from a starting row.

A solution of the type described above has been found hazardous from various points of view, particularly when the need arises, on the one hand, to act on a row of articles moving at a high rate, and hence a high speed and, on the other hand, to adapt the device easily to the handling of articles of different dimensions, weights, etc.

The object of the present invention is to provide a solution which, whilst retaining the advantages of the known device described above, overcomes the aforesaid disadvantages.

According to the present invention, this object is achieved by virtue of a device having the further characteristics recited in Claim 1.

In summary, in the device according to the invention, the diversion or deflection exerted on the articles of the input row (which is selective since it is carried out on only some of the articles, according to any sequence, for example, involving one article in every two, one article in every three, two articles in every three, two articles in every four, etc., according to any combination) is achieved by means of an aeriform flow (usually an air-flow) projected laterally onto the articles so as to urge them towards the branch conveyor disposed beside the conveyor on which the starting row advances.

The solution according to the invention can be made adaptive from various points of view.

In the first place, it is possible to meter the intensity of the action (in practice, the intensity of the jet or puff of air) in dependence on the dimensions and particularly the weight of the articles processed and/or in dependence on their speed of advance. In fact, for a given mass, articles moving more quickly clearly have greater momentum and therefore require a greater diverting force and hence a correspondingly greater puff pressure.

Moreover, the Applicant has found that, whereas for relatively low speeds of movement, the selectivity of the diversion can be achieved simply by intermittent piloting of the puff so that it is generated only for the articles which are to be diverted, as the speed of the articles, and hence the rate of operation of the device, increases the intermittent piloting of the puff gives rise to disturbance effects (probably due to pressure waves) which affect not only the article to be diverted at the time in question but also those adjacent to it in the starting row. In these conditions, the invention provides for a capability to generate the deflecting or diverting air-flow continuously and to achieve the selectivity of the diversion by restraint of the articles which are not to be diverted on the starting conveyor, for example, by the creation of a local vacuum (subatmospheric pressure) which acts on the articles through perforations in the conveyor in the positions occupied by the articles which are not to be diverted. Naturally, alternative and equivalent solutions (for example, based on a mechanical or possibly magnetic restraint of the articles which are not to be diverted) are possible.

The Applicant has found that, although the solution just described (continuous blowing with selective restraint of the articles which are not to be diverted) is particularly advantageous at high rates of operation, it is not advantageous at lower rates since it may give rise, for example, to undesired rotation of the articles diverted. In its currently-preferred embodiment, the invention therefore also provides for a capability to alternate the two modes of operation described (intermittent blowing and continuous blowing) with the use of intermittent blowing for lower rates of operation and continuous blowing for higher rates of operation, with a change from one mode of operation to the other in an intermediate band of operating rates.

The invention will now be described, purely by way of non-limiting example, with reference to the appended drawings, in which:
Figure 1 is a general perspective view of a device according to the invention, and
Figure 2 is a partial view reproduced on an enlarged scale and corresponding approximately to a section taken on the line II-II of Figure 1.

The device according to the invention, generally indicated 10, is intended to operate downstream of a handling station generally indicated A.

With reference, by way of example, to a system for the automatic packaging of confectionery products, the station A may be constituted, for example, by a wrapping machine of the type currently known as a "flow-pack" or "form-fill-seal" or, in short, "ffs" machine.

Packaging machines of this type are widely known in the art as is shown, for example, by the United States patents US-A-4 761 937, US-A-4 862 673, US-A-4 914 889, US-A-5 067 307, US-A-5 272 853 and US-A-5 351 464, all assigned to the same company to which the present application is assigned.

Machines of this type generate an ordered flow of packaged articles P at their outputs on an output conveyor generally constituted by a motor-driven belt conveyor L. For the purposes of the present invention, this flow may be generally regarded as a (starting) row of moving articles.

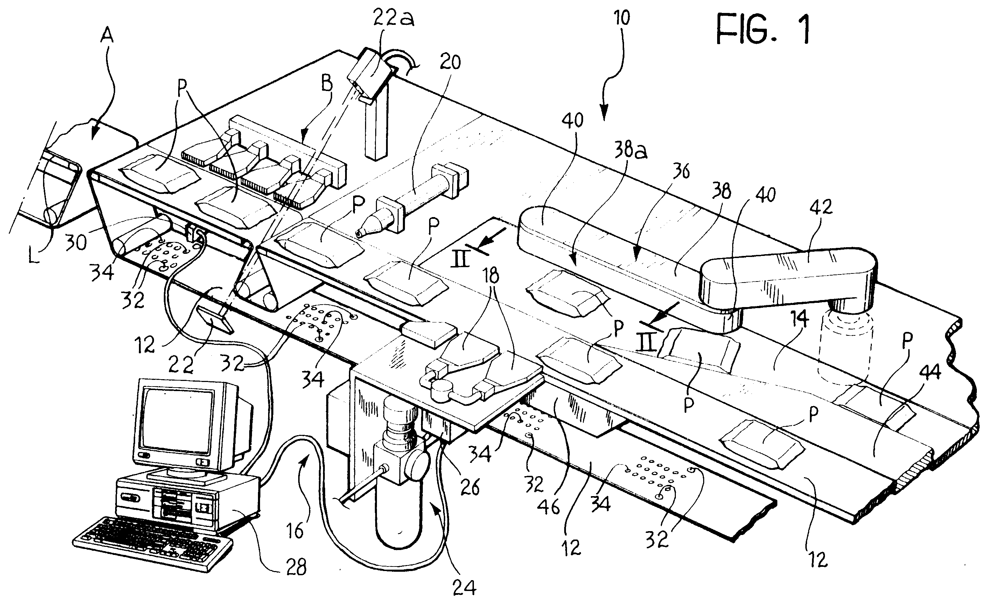

In Figure 1, a blowing unit of generally known type, schematically indicated B, is intended to be piloted selectively (according to known criteria) so as to expel defective products from the flow of articles P, typically such as packages which, owing to a defect occurring in the machine A or even upstream thereof, are actually constituted by empty wrappers or by packages which are incomplete, for example, owing to a lack of one or more products inside them.

The function of the device 10 is essentially to receive the row of articles P coming from the upstream station A and to subdivide it into two rows of articles P (rows which may be defined as "derived" rows) which advance parallel to one another at the output of the device 10.

For this purpose, the device 10 comprises two conveyors side by side, indicated 12 and 14, respectively, which are also preferably constituted by normal belt conveyors for handling articles such as, for example, confectionery articles and which are driven at substantially or exactly the same speed by a common motor or by respective coupled motors (not shown).

It will be appreciated that, at the output end of the device 10 (the right-hand bottom portion in Figure 1) the two conveyors 12 and 14, also referred to below as the main conveyor 12 and the branch conveyor 14, are shown as being of indeterminate length.

For the purposes of an understanding and of the embodiment of the invention, it is in fact not relevant to know the fate, so to speak, of the two derived rows of articles P produced at the output of the device 10. The derived rows may in fact advance further parallel to one another towards further handling stations (for example, boxing machines or further wrapping machines for forming wrappers of the "multi-pack" type, etc.), if necessary, after undergoing further subdivisions such as that which will be described below with specific reference to the device 10 of Figure 1. As a possible alternative (it is emphasised that this is only one of many possible alternatives) the two conveyors 12 and 14 may be interrupted immediately downstream of the device 10, for example, at different distances, so as to be subject to the action of a further diverting device which transfers the respective flows of articles onto other conveyors acting along paths inclined to or perpendicular to the paths of advance of the articles on the conveyors 12 and 14. Moreover, although in the following description reference is made, by way of non-limiting example, to a subdivision which provides for two derived output rows to be formed from the row of articles P coming from the station A by diversion performed by sending off one article in every two in sequence, this solution is only one of the many possible solutions. For example, instead of diverting one article in every two, it is possible to consider diverting one article in every three, two articles in every three, two articles in every four, etc., according to specific requirements. It will thus be understood, for example, that the two derived rows do not necessarily have to include the same number of articles per unit of length so that the device 10 according to the invention may also be used, for example, for modulating the flows of articles P in the output rows, for example, by adding to one of the two rows whilst the other is, so to speak reduced, to meet particular requirements (including momentary slowing-down of one or more of the stations downstream, etc.). Thus, in certain operating conditions, the device 10 according to the invention may be used to shunt the entire input flow of articles P onto the conveyor 14 or, conversely, to provide for the entire input flow to continue to advance on the main conveyor 12 without any article being diverted onto the conveyor 14.

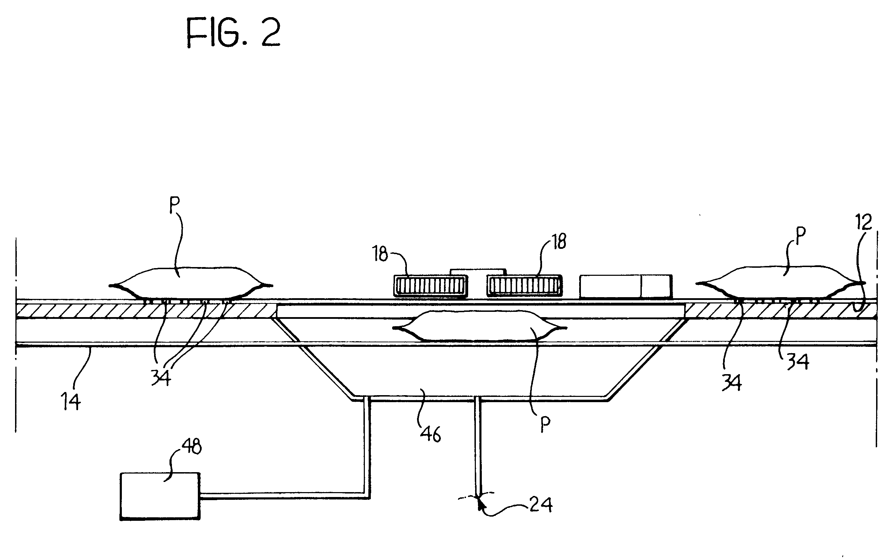

The core of the device 10 is constituted by a pneumatic diverting station, generally indicated 16 and comprising one or more blowing heads 18 for directing an aeriform jet or puff (usually of air) onto the articles P advancing on the main conveyor 12, transverse the direction of movement of the articles P. The jet or puff in question is intended to ensure that it is possible (it will be appreciated from the following that this is not an absolute requirement) for the article P struck thereby to be urged away from the diverting station so as to pass, or rather fall, from the main conveyor 12 onto the conveyor 14. The term "fall" has not been used accidentally since the upper conveyor pass of the branch conveyor 14 is preferably kept at a height at least slightly below the upper conveyor pass of the main conveyor 12 as shown in a deliberately emphasized manner in the side view of Figure 2.

The blowing heads 18 are of generally known type and may be constituted by blowing heads such as those, schematically indicated B, used to expel the defective articles P at the output of the upstream station A.

In a preferred embodiment, the blowing heads 18 have a generally flattened shape with outlets (see, in particular, the side view of Figure 2) with multiple nozzles in a generally comb-like arrangement. The selection of the number and size of blowing heads 18 is preferably correlated to the expected dimensions of the articles P so that the front of the air-jet produced by the blowing heads 18 extends longitudinally (relative to the direction of advance of the articles P on the conveyor 12) for a distance approximately corresponding to the overall length of the articles P. Although this choice is preferable, it should not, however, be considered imperative.

In this connection, it should be noted that, in the field of packaging systems, it is also known to use blowing heads of different types, for example, the type of blowing head indicated 20 situated immediately upstream of the pneumatic diverting station 16 and constituted in practice by a tubular nozzle connected to a pumping source (not shown), also for selectively generating a lateral puff or jet of air. The purpose of this is to expel from the device 10, upstream of the diverting station 16, any "groups", that is, blocks of two or potentially more articles P which, owing to defective operation of the station A, are attached to one another.

For this purpose, a so-called optical gate operates in the transition region between the downstream end of the output conveyor L of the station A and the upstream end of the main conveyor 12 of the device 10. This gate may be constituted, for example, by a photoelectric unit 22a comprising a generator such as an LED or equivalent with an associated photoelectric detector. Optical gate units of the type described above are well known in the art and are available from and produced commercially by, for example, the company Erwin Sick (Germany). The generator produces optical, typically infra-red, radiation, which is emitted from the upper side of the connection region between the two conveyors L and 12 towards a mirror 22b situated beneath the two conveyors and oriented so as to reflect the radiation towards the photodetector of the unit 22a. The optical radiation propagated from and towards the generator/detector unit 22a is thus intercepted selectively by the articles P. The presence of a so-called group is detected as a result of the prolongation of the intercepted condition of the optical radiation from and towards the unit 22a, with the consequent activation of the blowing head 20, when the presence of a group is detected, to expel the group from the packaging systems.

With reference once more to the diverting station 16, in the embodiment illustrated, it has been formed with the use of two comb-like blowing units 18 connected to an aeriform source under pressure (typically air) schematically indicated 24 in the appended drawings.

A solenoid valve 26 interposed between the source 24, which generates an air pressure of the order of 3.5-4 atmospheres, and the blowing heads 18 is subservient to a control unit 28 usually constituted by a part or a function of the electronic control unit (such as a miniprocessor, a personal computer or a so-called PLC) which supervises the operation of the device 10 in general and usually the operation of the systems as a whole in which the device 10 is inserted.

The solenoid valve 26 has the function of selectively controlling the transmission of the compressed air towards the blowing heads 18.

In the currently-preferred embodiment of the invention, the solenoid valve 26 can perform a dual function for the control and hence the piloting of the blowing heads 18:
- a first function, which may be defined simply as opening and closure, is directed towards ensuring that the blowing heads 18 emit puffs or jets of air in selectively predetermined time intervals by the opening of the solenoid valve 26, and
- the second, regulation function allows for variation of the intensity of the puff or jet of air produced by the blowing heads 18 when the solenoid valve is brought to the open position.

Solenoid valves of this type are available from and produced by the firm Matrix of Ivrea (Turin). In general, they are multi-channel solenoid valves (for example, with eight channels) in which it is possible to set selectively the number of channels of the solenoid valve 26 which are opened when the solenoid valve 26 is opened so that the intensity of the jet or puff of air produced can be varied selectively.

A solenoid valve of this type can nevertheless also, if desired, arrange, in nominal closure conditions (and hence when the puff or jet of air which diverts the articles P is not generated), for one channel of the solenoid valve to be kept open in order to generate limited ventilation in the region of operation of the station 16 (for example, to prevent the accumulation of fragments, etc.).

A sensor, indicated 30, typically an optical sensor, is constituted, for example, by an optical gate such as the optical gate 22a, 22b described above, or a similar device. The sensor 30 is intended to provide the control unit 28 with a tachometric or synchronization signal which identifies the speed and the so-called "phase" of movement of the main belt 12 so that the unit 28 can act on the pneumatic diverting station 16 at predetermined moments in time, that is, when an article P is passing in front of the blowing outlets 18.

At least in principle, a tachometric or synchronization signal relating to the movement of the articles P on the conveyor 12 could also be obtained in a different way, for example, by direct detection of the transit of the articles P in the region of the diverting station 16 in a manner similar to that described above with reference to the operation of the optical gate 22a, 22b, or as a result of interlocking (mechanical or electronic) of the drive with the movement of the output conveyor L of the station A situated upstream.

In the preferred embodiment of the invention, the signal is preferably produced by the detection by the sensor 30 of marking notches (or discontinuities of the surface appearance in general) provided at certain intervals on the conveyor 12 and constituted, even more preferably, by holes 32 formed at predetermined intervals along one or both edges of the belt 12. Naturally, this marking could also be constituted by notches, nicks, or simply graphic marks provided on the conveyor belt 12.

However, for reasons which will become clearer from the following, the same belt is preferably provided, at predetermined intervals (and, more precisely, in the positions which, when the device 10 is in operation are intended to be occupied by articles P which do not have to be diverted towards the branch conveyor 14) with arrays of holes 34 constituted, for example, by matrices of holes of generally smaller dimensions than those of the marker holes 32.

A further motor-driven unit (of known type), generally indicated 36, comprises a band or belt 38 wound around respective end rollers or pulleys 40 with vertical axes. The belt 38 thus has an active pass 38a which extends vertically in the region of the diverting station 16, on the opposite side thereto of both the main conveyor 12 and the branch conveyor 14. In other words, the elements are arranged in the following order in a theoretical vertical plane transverse the direction of advance of the articles P: the diverting station 16, the active pass of the main conveyor 12, the active pass of the branch conveyor 14 (situated slightly lower than the active pass of the main conveyor 12), and the vertical active pass 38a of the conveyor 38.

The conveyor or belt 38 is driven by respective drive members generally indicated 42, and also of known type; for example, they may simply be a mechanical transmission unit driven by the same motor, not shown, which drives the conveyors 12 and 14.

The articles P which are transferred from the main conveyor 12 to the branch conveyor 14, falling onto it in the region of the diverting station 16, could in fact possibly continue along their trajectory. By virtue of the presence of the unit 36, however, they collide with the pass 38a without being subjected to particular braking or friction effects which could bring about an undesired orientation of the articles. In practice, the articles in question are urged from the conveyor 12 onto the conveyor 14, which moves at the same speed and thus with a zero relative speed of advance, and they may hit the active pass 38a which, since it is also moving at the same speed as the conveyors 12 and 14, is also seen as theoretically stationary by the articles P.

The Applicant has noted that, although the use of the further belt 38 is preferable, it is not at all imperative since, at least in some conditions, this conveyor may simply be replaced by a fixed abutment element such as a vertical wall (for example, of metal so as not to offer appreciable resistance to the relative sliding of the articles P) located in the same position in which the active pass 38a is shown in Figure 1.

A fixed deflector, indicated 44, on the other hand, is typically constituted by a horizontal plate having a fairly sharp wedge-shaped profile in plan, the function of which is to slide (naturally this refers to a relative movement since the deflector 44 is fixed to the framework of the device 10, whereas the articles P are moving) between the two rows of articles P created by the diverting station 16 so as to regulate the further advance of the articles P on the conveyor 14. In practice, after they have been transferred onto this latter conveyor, possibly hitting the active pass 38a of the belt 38, as a result of the movement of the conveyor 14, the articles P bear against a respective side of the deflector element 44 at a slight angle to the direction of advance of the conveyor 14 so as to be aligned by a general adjustment effect.

A kind of hood, indicated 46, (see Figure 2 in particular) is located in the region of the diverting station 16 beneath the upper pass of the conveyor 14 on which the articles P advance. The hood 46, the mouth of which naturally faces upwardly, as can be seen in Figure 2, communicates (possibly with the interposition of regulation valves) with a source of subatmospheric pressure such as, for example, a vacuum pump, schematically indicated 48 solely in Figure 2.

The device according to the invention provides essentially for two modes of operation.

A first mode of operation ignores the presence of the hood 46 and of the vacuum formed therein by the pump 48 as well as the presence of the holes 34 in the conveyor belt 12.

On the basis of this first mode of operation, each time an article P to be diverted onto the branch conveyor 14 passes the pneumatic station 16 (the relative data being obtained by the control unit 28, as seen, in dependence on the signal generated by the sensor 30) the solenoid valve 26 is opened so that the heads 18 produce a jet or puff of air of sufficient intensity to urge the article P in question onto the conveyor 14 (possibly causing it to run into the belt 36 which absorbs the throwing action thus exerted).

This action may be exerted, for example, so as to divert towards the branch conveyor 14 one article in every two of those included in the input row coming from the upstream station A on the main conveyor 12. This is precisely the solution shown schematically in Figure 1.

Naturally, as already stated several times above, the sequence which provides for the diversion of one article in every two is one of many possible sequences and should not be regarded as limiting the invention.

The second mode of operation, on the other hand, is based upon the presence of the hood 46 and of the corresponding subatmospheric pressure which is produced inside it as a result of the action of the pump 48. When the portions of the belt of the conveyor 12 which have the holes 34 pass over the hood 46 (see Figure 2), the vacuum in the hood is such as to bring about a net suction flow of air from the outside atmosphere towards the interior of the hood. The articles P which are bearing on the arrays of holes 34, however, tend to obstruct this suction flow, in practice acting as plugs which substantially block all of the holes 34, obstructing the air-flow towards the interior of the hood 46. As a result, the articles in question are restrained firmly on the conveyor belt 12 at least in the region of the hood 46 and hence in the region of the diverting station 16.

The transverse jet or puff of air produced by the blowing heads 18 is consequently not such as to manoeuvre out the products in question which therefore remain on the main conveyor 12 without being diverted onto the branch conveyor 14.

Naturally, the result just described involves a coordination of various factors such as the level of subatmospheric pressure created inside the hood 46, the number and dimensions of the holes 34, and the intensity of the jet or puff of air produced by the heads 18.

Clearly, if the level of vacuum in the hood 46 were insufficient for good restraint of the articles P situated on the perforated portions 34 of the conveyor 12, these articles P could undesirably be urged onto the branch conveyor 14. Similarly, if the jet or puff of air produced by the heads 18 is extremely intense and strong, the articles in question in any case run the risk of being manoeuvred from the conveyor 12. However, the precise coordination of the parameters described above constitutes a normal design task and, usually, simply a correct adjustment of the device 10 in dependence on the specific requirements of use. The description of further details in this connection is therefore superfluous herein.

It can also be understood that, although the solution described is considered greatly preferable for achieving the desired restraint of the articles P which are not to be diverted, it is not the only possible solution. In fact, alternative solutions, for example, of a mechanical nature are possible, such as the use of blades carried by the periphery of a wheel or carousel with a horizontal axis disposed on top of the diverting station 16 and selectively pushing the articles P which are not to be diverted against the conveyor pass of the conveyor 12, thus rendering ineffective the jet or puff of air coming from the heads 18.

Whatever solution is adopted for achieving the restraint, it can easily be understood that, in the presence of the restraint, the jet or puff of air produced by the heads 18 no longer needs to be modulated in a pulsed manner but can be maintained continuously or substantially continuously in order to divert towards the branch conveyor 14 all of and only those articles P which are not restrained on the conveyor 12, being ineffective, however, on the articles P subject to restraint.

If the aforesaid second mode of operation (a continuous jet or puff of diverting air with selective restraint of the articles P on the conveyor 12) is used, the criterion for the shunting of the articles P between the two rows is in fact dictated by the arrangement of the restraining means and hence of the arrays of holes 34 in the belt of the conveyor 12. In the embodiment of Figure 1 (diversion of one article in every two) the arrays of holes 34 are correspondingly arranged in the belt 12 in an alternating sequence of consecutive perforated and blank sections of belt each corresponding approximately to the area occupied by an article P.

The structure of the device 10, however, enables the belt 12 to be replaced quickly by a belt having a different distribution of perforated sections 34 so that the logic regulating the shunting of the articles P into the two derived rows can correspondingly be varied.

In the currently-preferred embodiment, the device according to the invention is arranged so as to be able to operate selectively in either of the two modes of operation described above.

The first mode of operation (with the jet or puff of air activated and prevented alternately so as to act only on the articles P to be diverted onto the branch conveyor 14) has been found preferable for medium/low rates of operation (for example, up to 120-180, typically 150 articles/minute advancing in the row input to the device).

In the transition range (120-180 articles/minute) the two modes of operation have been found almost equivalent.

Above this transition range and particularly for very high rates (400 articles/minute and more) disturbance phenomena arise (probably caused by pneumatic pressure waves generated by the intermittently-operating heads 18) which entail a change to the second mode of operation with continuous or substantially continuous operation of the blowing heads 18 and activation of the hood 46 and of the associated members (it should, however, be noted that the hood 46 may also be kept active during operation in the first mode).

In a complementary manner, it has been found that, during operation in the second mode, below the transition range defined above adverse phenomena may arise such as, for example, undesired rotations of the articles P which are not restrained on the conveyor 12; in fact, it can be understood that, in these conditions, and particularly for very low rates, the articles P gradually enter the field of action of the jet or puff (which is always active) so that their front ends (in the direction of advance) are subjected to the action of the jet or puff a certain period of time before the same jet or puff acts on the rear end.

Consequently, when the device 10 is arranged for operating at low rates (below or at most within the transition range indicated above), the unit 28 controls the device 10 so as to cause it always to operate in the first mode of operation (intermittent jet or puff of air). This also occurs during the starting-up and slowing-down of the operation of the systems, for example, in relation to its stoppage.

On the other hand, in the case of systems which are intended to operate at high rates (for example 350 articles/minute) the unit 28 acts on the device 10 so as to cause it to function in the first mode of operation (intermittent jet or puff of air), during the starting-up of the system, and thus as long as the rate of transit of the articles P remains below the transition range. When, as a result of gradual acceleration, the device 10 is operating in the transition range, the unit 28 intervenes, causing it to change to the second mode of operation (continuous jet or puff of air, activation of the hood 46, if it is not already activated previously). This condition is maintained during the normal steady-state operation of the system.

If a momentary slowing-down takes place in order to stop the system, or in any event takes place, such as to bring the rate of advance of the articles below the transition range, the unit 28 acts on the device 10 again causing it to return to the first mode of operation, that is, with control of the blowing heads 18 such that they again emit the jet or puff of air intermittently.

Whichever mode of operation is adopted at the time in question, the solenoid valve 26 can be piloted (according to criteria described above, that is, by modulation of the number of channels opened at the activation stage) so as to regulate the intensity of the jet or puff of air (whether it be intermittent or continuous) in dependence on at least two parameters:
- the dimensions and particularly the mass of the articles P, with an increase in intensity for articles of larger dimensions and mass, and
- their rate of advance, and hence their speed, with an increase/decrease in intensity according to whether the speed increases or decreases.

Generally, the regulation according to the type of articles constitutes a preselection from various possible values provided for by the producer of the device 10, this preselection being carried out at the stage when the system is adjusted to operate on articles of a certain type. The second adjustment, however, is carried out automatically by the unit 28 in dependence on the value of the speed of the articles (a value deduced, for example, from the signal produced by the sensor 30) according to scales for the increase and decrease of the intensity of the jet or puff which are also at least partially correlated to the type of article and may be defined, for example, at the level of experimental determination and adjustment by the producer and/or by the user of the system.

## Claims

1. A device (10) for forming, from a row of moving articles (P), at least two derived rows of moving articles (P), the device comprising:
- a main conveyor (12) for receiving the input row of moving articles (P),
- a branch conveyor (14) beside the main conveyor (12), and
- diverting means (16) for selectively transferring articles (P) from the main conveyor (12) to the branch conveyor (14), the articles remaining on the main conveyor (12) and the articles (P) transferred by the diverter means (16) onto the branch conveyor (14) constituting, respectively, said derived rows,
characterized in that the diverting means (16) comprise a pneumatic source (18) for generating a diverting aeriform flow which can act on the articles (A) on the main conveyor (12) in order to transfer them selectively onto the branch conveyor (14).

2. A device according to Claim 1, characterized in that adjustment means (26) are associated with the pneumatic source (18) for selectively varying the intensity of the aeriform flow.

3. A device according to Claim 1 or Claim 2, characterized in that adjustment means (26) are associated with the pneumatic source (18) for activating the pneumatic source (18) intermittently so that, in a first, intermittent mode of operation, the diverting aeriform flow is generated when those articles (P) which are to be transferred onto the branch conveyor (14) pass the pneumatic source (18).

4. A device according to any one of the preceding claims, characterized in that adjustment means (26) are associated with the pneumatic source (18) for activating the pneumatic source (18) substantially continuously so that, in a continuous mode of operation, the diverting aeriform flow strikes all of the articles (P), and in that restraining means (34, 46, 48) are associated with the main conveyor (12) for restraining on the main conveyor (12) articles (P) other than those (P) transferred onto the branch conveyor (14).

5. A device according to Claim 4, characterized in that the main conveyor (12) is a belt conveyor comprising an active pass extending in the region of the pneumatic source (18), and in that the restraining means comprise:
- perforated areas (34) provided in the main belt conveyor (12) in the positions which are occupied in use by those articles (P) which are to be restrained, and
- a source of subatmospheric pressure (46, 48) acting on the active pass of the main conveyor (12) in the region of the pneumatic source (18) in order to induce, in the perforated areas (34), a suction effect which restrains on the main conveyor (12) the articles (P) which are to be restrained.

6. A device according to any one of the preceding claims, characterized in that the pneumatic source (18) is situated on the opposite side of the main conveyor (12) to the branch conveyor (14), the branch conveyor carrying an associated abutment element (38) which can stop the movement of the articles (P) transferred by the pneumatic source (16) from the main conveyor (12) towards the branch conveyor (14).

7. A device according to Claim 6, characterized in that the abutment element (38) is situated on the opposite side to the pneumatic source (18) of the main conveyor (12) and of the branch conveyor (14), which are side by side.

8. A device according to Claim 6 or Claim 7, characterized in that the abutment element (38) is also constituted by a belt element having an active pass (38a) movable in the same direction as, and in synchronism with, the main conveyor (12) and the branch conveyor (14) and extending vertically above the branch conveyor (4) on the opposite side to the main conveyor (12).

9. A device according to any one of the preceding claims, characterized in that a deflector element (44) is interposed between the main conveyor (12) and the branch conveyor (14) in a position generally downstream of the pneumatic source (18) in the direction of advance of the articles (P) and can act on the articles (P) transferred onto the branch conveyor (14) to align them by a general adjustment effect.

10. A device according to Claim 3 and Claim 4, characterized in that it comprises a control unit (28) sensitive (30) to the speed of movement of the articles (P) for selectively causing the device (10) to operate in the intermittent mode of operation or in the substantially continuous mode of operation, in dependence on the speed of movement of the articles (P).

11. A device according to Claim 10, characterized in that the control unit (28) detects the reaching of a range of intermediate values of the speed of movement of the articles (A) in order to change the device from the intermittent mode of operation to the substantially continuous mode of operation and, conversely, from the substantially continuous mode of operation to the intermittent mode of operation, when the speed of movement reaches the intermediate range of speed values owing to an increase or to a decrease in the speed of movement.

12. A device according to any one of the preceding claims, characterized in that it comprises at least one sensor (30) for generating a signal indicative of the movement of the main conveyor (12), the at least one sensor element (30) being sensitive to variations of the surface appearance of the main belt conveyor (12) in certain positions on the main conveyor (12).

13. A device according to Claim 5 and Claim 12, characterized in that it comprises holes (32) in the main belt conveyor (12) defining the variations in the surface appearance.

14. A device according to Claim 13, characterized in that the holes (32) are located in the region of the perforated areas (34).
